# EUROPEAN PATENT APPLICATION

(11) **EP 4 675 813 A1**
(43) Date of publication of application: **07.01.2026**
(21) Application number: 25183346.3
(22) Date of filing: 17.06.2025
(51) Int. Cl.: H01M 50/342, H01M 50/383, H01M 50/209

(54) **BATTERY ASSEMBLY**

(30) Priority: 03.07.2024 KR 20240087641
(71) Applicant: SAMSUNG SDI CO., LTD., Yongin-si, Gyeonggi-do 17084 (KR)
(72) Inventor: HWANG, Taesin, Yongin-si, Gyeonggi-do 17084 (KR); YANG, Jongwoon, Yongin-si, Gyeonggi-do 17084 (KR)
(74) Representative: Gulde & Partner

(57) **Abstract**

A battery assembly configured to prevent battery cells from igniting. A plurality of battery cells (500) including a cap plate (520) having a vent. A pouch (400) is over the vent, and including a fire extinguishing agent. The vent includes a breakable portion configured to break in response to a rupture of the vent and a non-breakable portion (544) configured to deform in response to the rupture of the vent. The pouch is configured to be opened by the deformation of the non-breakable portion of the vent to allow the fire extinguishing agent to be discharged toward the vent of each of the battery cells.

## Description

### BACKGROUND

### 1. Field

Embodiments of the present disclosure are related to a battery assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Lithium-ion secondary batteries are used as a type of secondary battery. In a case where Li-ion secondary batteries are continuously left or used at relatively high temperatures or charged or discharged with relatively high currents, internal gas may be generated due to cell deterioration.

There is also a risk that internal gas generated from an Li-ion secondary battery may increase the pressure within the case to damage internal components, thereby causing a higher likelihood of an ignition.

Regarding this issue, some types of secondary batteries may include a vent component therein. The function of the vent component is to vent (e.g., blow out) internally generated gas to the outside when the pressure of the case reaches a predetermined value. However, even after the gas has been discharged, electrical or chemical reactions of the internal components of the secondary battery may generate heat, thereby causing the internal components to melt and blow out of the case.

In this regard, there are various efforts to reduce the melting of internal components in secondary batteries or to prevent or reduce the likelihood of ignition due to damage to internal components.

The above information disclosed in this Background section is for enhancement of understanding of the background of the present disclosure, and therefore, it may contain information that does not constitute related (or prior) art.

### SUMMARY

Aspects according to one or more aspects of embodiments are directed toward a battery assembly to overcome the problems described above.

Aspects according to one or more aspects of embodiments are directed toward a battery assembly configured to prevent battery cells from igniting.

These and other aspects and features of the present disclosure will be described in or will be apparent from the following description of embodiments of the present disclosure.

To realize at least one of the above objectives, a battery assembly according to one or more embodiments includes: a plurality of battery cells each including a cap plate having a vent; and a pouch (e.g. directly) over the vent, and the pouch including (e.g. encapsulating, containing) a fire extinguishing agent. The vent includes (e.g. comprises) a breakable portion configured to break in response to a rupture of the vent and a non-breakable portion configured to deform in response to the rupture of the vent, and the pouch is configured to be opened by the deformation of the non-breakable portion of the vent to allow the fire extinguishing agent to be discharged toward the vent of each of the battery cells.

According to one or more embodiments, the breakable portion may include a notch configured to be broken by an internal pressure of the battery cell, and the non-breakable portion is connected to the cap plate of the battery cell.

According to one or more embodiments, the notch may have a zigzag shape.

According to one or more embodiments, the vent may include a protrusion, and the pouch may be configured to be opened by the protrusion.

According to one or more embodiments, the protrusion may be on the non-breakable portion.

According to one or more embodiments, the protrusion may be on a corner of the non-breakable portion defined by the breakable portion.

According to one or more embodiments, the breakable portion may include: a first breakable portion located at the center of the vent; and a second breakable portion connected to the first breakable portion. The protrusion may be on a corner of the non-breakable portion defined by the first breakable portion and second breakable portion.

According to one or more embodiments, the protrusion may be on a top surface of the non-breakable portion.

According to one or more embodiments, the protrusion may be on a side portion of the non-breakable portion.

According to one or more embodiments, the width of the pouch may be less than a distance between electrode terminals of the battery cell and greater than a length of the vent.

According to one or more embodiments, a length of the pouch may be a multiple of a width of the battery cell.

According to one or more embodiments, the pouch may cover the vents of the battery cells. For example, one single pouch may completely cover each vent of the plurality of the battery cells.

According to one or more embodiments, the pouch may include one of polyamide, polypropylene, low density polyethylene, or linear low density polyethylene. In other words, the pouch includes a material which may comprise at least one of polyamide, polypropylene, low density polyethylene, or linear low density polyethylene.

According to one or more embodiments, the fire extinguishing agent may include a fluorinated ketone.

To realize at least one of the above objectives, a battery assembly according to one or more embodiments includes: a plurality of battery cells each including a cap plate having a vent; at least one busbar electrically connecting the battery cells; a busbar holder over the battery cells; and a pouch between the busbar holder and the battery cells, and including a fire extinguishing agent. The vent includes a breakable portion configured to break in response to a rupture of the vent and a non-breakable portion configured to deform in response to the rupture of the vent, and the pouch is configured to be opened by the deformation of the non-breakable portion of the vent to allow the fire extinguishing agent to be discharged toward the vent of the battery cell.

According to one or more embodiments, the battery cells may be located along a longitudinal direction of the busbar holder, and the pouch may be located over the vent in the longitudinal direction of the busbar holder.

According to one or more embodiments, the pouch may be located over the vent by being spaced apart from electrode terminals of the cap plate.

According to one or more embodiments, the breakable portion may include a notch configured to be broken by an internal pressure of the battery cell, and the non-breakable portion may be connected to the cap plate of the battery cell.

According to one or more embodiments, the vent may include a protrusion, and the pouch may be configured to be opened by the protrusion.

According to one or more embodiments, wherein the pouch may include one of polyamide, polypropylene, low density polyethylene, or linear low density polyethylene.

According to one or more embodiments of the present disclosure, in the battery assembly, a plurality of battery cells may be prevented from igniting.

According to one or more embodiments of the present disclosure, in the battery assembly, prior to thermal runaway of at least one battery cell of the battery cells, the pouch may be opened to discharge the extinguishing agent into the battery cell.

According to one or more embodiments of the present disclosure, in the battery assembly, after the pouch is opened, the battery assembly may be more easily replaced without the need or desire to construct a separate fire extinguishing system.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a battery assembly according to one or more embodiments of the present disclosure;
FIG. 2 illustrates a perspective view showing an example of a pouch over a plurality of battery cells according to one or more embodiments of the present disclosure;
FIG. 3 illustrates a cross-section taken along line X-X' in FIG. 2;
FIG. 4 illustrates a plan view showing an example of a pouch according to one or more embodiments of the present disclosure;
FIG. 5 illustrates a perspective view showing an example of a battery cell according to one or more embodiments of the present disclosure;
FIG. 6 illustrates a cross-section of the vent shown in FIG. 5, taken along line Y-Y';
FIG. 7 illustrates a plan view showing an example of the protrusion of the non-breakable portion according to one or more embodiments of the present disclosure;
FIG. 8 illustrates a plan view showing another example of the protrusion of the non-breakable portion according to one or more embodiments of the present disclosure;
FIG. 9 illustrates a plan view showing an example of the notch of the non-breakable portion according to one or more embodiments of the present disclosure;
FIG. 10 illustrates an example of the vent according to one or more embodiments of the present disclosure in a case where the vent ruptures;
FIG. 11 illustrates another example of the vent according to one or more embodiments of the present disclosure in a case where the vent ruptures; and
FIG. 12 illustrates an example of the vent and the pouch according to one or more embodiments of the present disclosure in a case where the vent ruptures.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the dimensions and relative sizes of the shown layers and regions may be exaggerated for clarity of description. That is, the dimensions shown in the drawings are for illustrative purposes only and are not intended to be limiting. In addition, throughout the specification, the same reference numerals designate the same elements.

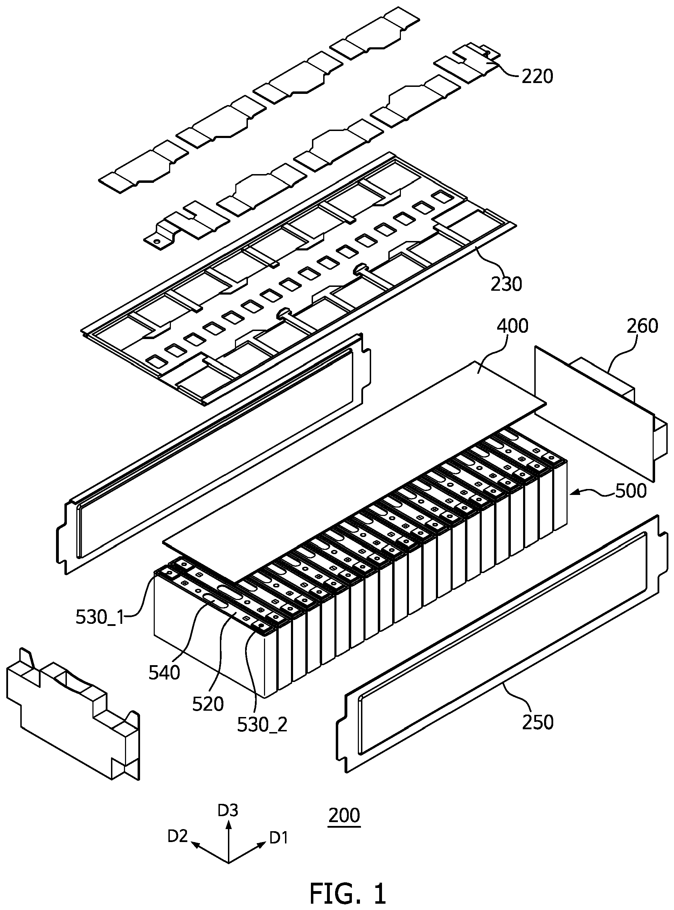

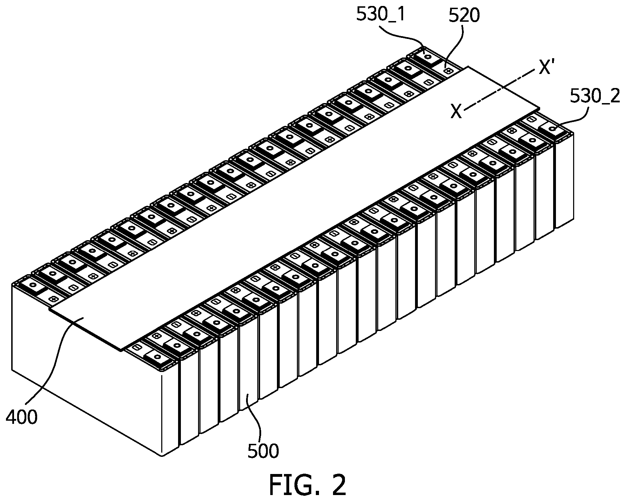

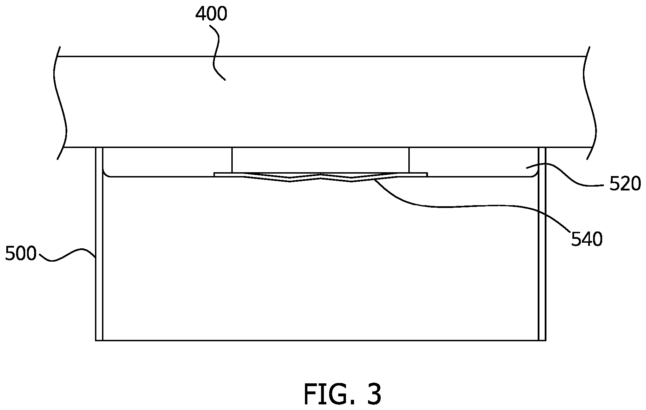

FIG. 1 illustrates a perspective view showing an example of a battery assembly according to one or more embodiments of the present disclosure, FIG. 2 illustrates a perspective view showing an example of a pouch disposed over a plurality of battery cells according to embodiments of the present disclosure, and FIG. 3 illustrates a cross-section taken along line X-X' in FIG. 2.

Hereinafter, a first direction may be defined as a direction D1 of a coordinate system, a second direction may be defined as a direction D2 of the coordinate system, and a third direction may be defined as a direction D3 of the coordinate system.

A battery assembly 200 according to the present disclosure may include a plurality of battery cells 500, a pouch 400, busbars 220, a busbar holder 230, side plates 250, and end plates 260. In the present disclosure, the number of the battery cells 500 shown in FIG. 1 is not intended to be limiting. Any number of battery cells 500 may form a cell stack, and the battery assembly 200 may include the cell stack. The arrangement of the battery cells 500 is also not limited to the structure shown in FIG. 1, and may be modified as needed or desired.

The battery assembly 200 may include a cell stack. The cell stack may include a plurality of battery cells 500 stacked in the first direction. According to one or more embodiments, the plurality of battery cells 500 in the cell stack may be arranged in the first direction such that wide sides thereof face each other. That is, a wide side of a battery cell may be arranged to face a wide side of an adjacent battery cell.

The cell stack may be accommodated by the plates 250 and 260. According to one or more embodiments, the plates 250 and 260 may include a pair of side plates 250 on opposite sides of the cell stack, respectively, a pair of end plates 260 coupled orthogonally to the side plates 250 and supporting the outermost angular surfaces of the battery cells 500 in the direction of arrangement (i.e., the direction D1), an end insulation cover between the cell stack and the end plates 260, and a top plate over the cell stack. In one or more embodiments, a bottom plate may be under the cell stack to support the cell stack from below.

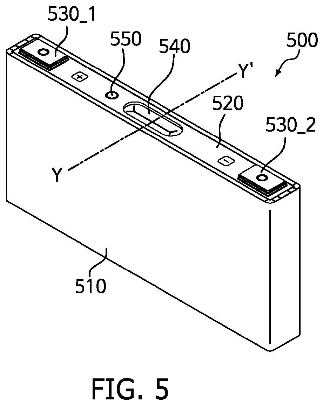

The battery cells 500 may be arranged in the longitudinal direction of the busbar holder 230. According to one or more embodiments, each of the battery cells 500 may include a cap plate 520 having a vent 540. The vent 540 of the cap plate 520 may include a breakable portion configured to break in response to the rupture of the vent 540 and a non-breakable portion configured to deform in response to the rupture of the vent 540. This will be described in more detail with reference to FIGS. 5 through 12.

The busbar holder 230 may support a plurality of busbars 220. The busbars 220 may be electrically connected to the battery cells 500. The busbars 220 may be electrically connected to a circuit board on which various circuits and components are mounted.

The busbar holder 230 may be over the battery cells 500 with reference to FIG. 1, and may support the busbars 220. The busbar holder 230 may be over the top plate. For example, the busbar holder 230 may be an approximately rectangular plate, and may include an insulating material.

The busbar holder 230 may be provided with a plurality of through-holes by which positive and negative terminals of the cap plate are exposed. The through-holes of the busbar holder 230 may expose the positive and negative terminals. That is, positive and negative terminals of the cap plate may be exposed by the plurality of through-holes in the busbar holder 230. The exposed positive and negative terminals may be electrically connected to the busbars 220.

The busbars 220 may connect (e.g., electrically connect) the positive and negative terminals. The busbars 220 may connect the battery cells 500 in series and/or parallel. In this regard, the busbars 220 may be provided in a plurality.

The pouch 400 may contain a fire extinguishing agent. The pouch 400 may be between the busbar holder 230 and the battery cells 500. The pouch 400 may be (directly) over the vents 540 of the battery cells 500 to avoid electrode terminals 530_1 and 530_2 of the cap plates 520. In other words, the pouch 400 may be directly and completely cover the vents 540, being arranged over the vents 540 of the battery cells 500 and between the electrode terminals 530_1 and 530_2 of the cap plates 520. That is, the pouch 400 does not cover the electrode terminals 530_1 and 530_2 of the cap plates 520. With this structure, the electrode terminals 530_1 and 530_2 of the cap plates 520 may be connected (e.g., electrically connected) using the busbars 220, and the pouch 400 may discharge the fire extinguishing agent into the vents 540 of the battery cells 500. In the event of a thermal runaway occurring in the battery cells 500, the cooling effect of the extinguishing agent discharged from the pouch may prevent the thermal runaway from spreading to adjacent battery cells 500. With such structural features, a battery fire extinguishing system may be more easily constructed without the need or desire to replace and mount a separate fire extinguishing system.

In a case where the battery cell 500 operates abnormally, the battery cell 500 may generate gas within the battery cell 500, and the gas may generate pressure. This may cause the vent 540 of the battery cell 500 to break, and the pressure may be released. After the gas is discharged from the battery cell 500 through the vent 540, the internal components of the battery cell 500 may react, thereby causing a thermal runaway. A thermal runaway may occur when the heat of the battery cell 500 rapidly increases, thereby leading to a fire. To prevent the thermal runaway of the battery cells 500, the pouch 400 may be over the battery cells 500, as shown in FIG. 2.

According to one or more embodiments, in a case where the non-breakable portion of the vent portion 540 is deformed, the non-breakable portion may contact the pouch 400. As a result, the pouch 400 may be torn and a portion of the pouch 400 may be opened, thereby allowing the fire extinguishing agent contained in the pouch 400 to be discharged from the pouch toward the vents 540 of the battery cells 500. For example, the fire extinguishing agent may be discharged into and/or outside the battery cells 500, thereby significantly reducing the temperature of the battery cells 500. This characteristic structure may prevent thermal runaway of the battery cells 500 and may prevent the thermal runaway from spreading to the adjacent battery cells 500.

According to one or more embodiments, the pouch 400 may be between the electrode terminals 530_1 and 530_2 of the battery cells 500 to avoid interfering with the electrical connection of the battery cells 500. That is, the pouch 400 does not overlap with the electrode terminals 530_1 and 530_2 in a plan view. The pouch 400 may also be over the vents 540 of the battery cells 500 to prevent thermal runaway of the battery cells 500. The width of the pouch 400 may be less than the distance between the electrode terminals 530_1 and 530_2 of the battery cells 500 to avoid interfering with the electrical connection of the electrode terminals. The length of the pouch 400 may be greater than the length of the vents 540 to cover the vent portion 540.

According to one or more embodiments, the pouch 400 may be between the battery cells and the busbar holder. In view of the arrangement of the pouch 400, the upper height of the pouch 400 may be smaller than the upper height of the electrode terminals 530_1 and 530_2 of the battery cell 500. In a case where the pouch 400 contains a fire extinguishing agent, the pouch 400 may have a bulging shape at the center of the pouch 400. The pouch 400 containing the fire extinguishing agent may be positioned over the vents 540 of the battery cells 500. The uppermost end of the pouch 400 containing the fire extinguishing agent may be positioned lower than or flush with the upper end of the electrode terminals 530_1 and 530_2 of the battery cells 500.

According to one or more embodiments, the busbar holder 230 may be spaced apart from the vents 540 of the battery cells 500. The busbar holder 230 may also be over the battery cells 500 and the pouch 400. As a result, the pouch 400 may be between the busbar holder 230 and the battery cells 500 and may be fixed to the top portions of the vents 540. Accordingly, the pouch 400 may be fixed to the top portions of the vents 540 without the need or desire for a separate holder to prevent the thermal runaway of the battery cells 500.

According to one or more embodiments, the length of the pouch 400 may correspond to a multiple of the length of the width of the battery cells 500. The battery cells 500 may be arranged in a single direction such that the wide sides thereof face each other. That is, a wide side of a battery cell may be arranged to face a wide side of an adjacent battery cell. As a result, the single pouch 400 may be over the vents 540 of the battery cells 500. The single pouch 400 may (completely) cover the vents 540 of the battery cells 500. As a result, in the event that the vent 540 of at least one of the battery cells 500 ruptures, the pouch 400 may be opened by the vent 540 of that battery cell 500. According to such structural features, the pouch 400 may prevent the thermal runaway of the battery cells 500, and the amount of the fire extinguishing agent may be increased so that a large amount of the fire extinguishing agent may be discharged into the battery cells 500.

Referring to FIG. 3, the pouch 400 may be over the vent 540 of the battery cell 500. The pouch 400 may be in contact with the cap plate 520 of the battery cell 500. The pouch 400 may be spaced apart from the breakable portion and non-breakable portion of the vent 540, such that the pouch 400 may not be opened prior to the breaking of the vent 540. Accordingly, during normal operation of the battery cell 500, the pouch 400 may not be opened, and during abnormal operation of the battery cell 500, the vent 540 may be ruptured and the pouch 400 may be opened. For example, the (e.g. polymer-based) material of the pouch 400 may be openable (e.g. breakable or meltable) by an applied pressure or at temperatures above normal operation pressures and temperatures of the battery cell 500.

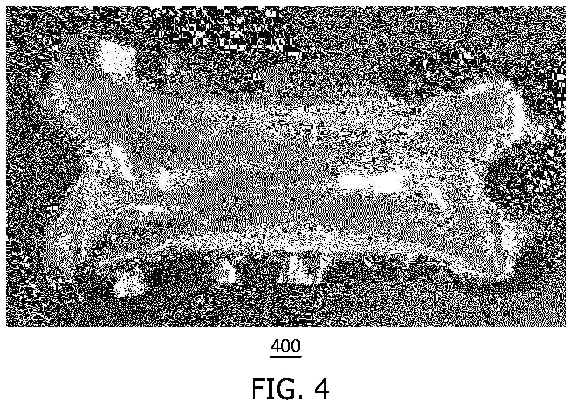

FIG. 4 illustrates a plan view showing an example of a pouch according to one or more embodiments of the present disclosure.

Referring to FIG. 4, the pouch 400 contains a fire extinguishing agent and may be configured such that the fire extinguishing agent is sealed to prevent the fire extinguishing agent from leaking. The pouch 400 may include a non-corrosive material to prevent leakage of the fire extinguishing agent during normal operation of the battery cell 500. The pouch 400 may include a material that allows the pouch 400 to be opened by contact with a deformed non-breakable portion of the vent 540 in the event of a rupture of the vent 540 during abnormal operation of the battery cell 500.

The material of the pouch 400 may include a polymer-based material. The polymer-based material is a material based on a polymeric substance that is chemically stable and therefore resistant to corrosion. The material preferably has relatively low mechanical strength compared to metals. Accordingly, the polymer-based material may be ruptured and opened by the vent 540. With respect to the properties described above, the material of the pouch 400 may include one of polyamide (PA), polypropylene (PP), low density polyethylene (LDPE), or linear low density polyethylene (LLDPE). Accordingly, the pouch 400 may be corrosion resistant to prevent leakage of the fire extinguishing agent sealed in the pouch 400 during normal operation of the battery cell 500, and may be opened by the vent 540 during abnormal operation of the battery cell 500.

The fire extinguishing agent may include a fluorinated ketone, preferably a per-fluorinated ketone, as for instance perfluoro(2-methyl-3-pentanone), (CF₃CF₂C(=O)CF(CF₃)₂). When sprayed, the fluorinated ketone may evaporate rapidly upon contact with fire or smoke, thereby effectively reducing the temperature of the battery cell 500. In one or more embodiments, the fluorinated ketone does react, for example, oxidize, with a contacting material and is a non-conductor, which may prevent the battery cell 500 from short circuiting.

FIG. 5 illustrates a perspective view showing an example of a battery cell according to one or more embodiments of the present disclosure.

The battery cell 500 may include: at least one electrode assembly having a wound or stacked structure in which a separator, which is an insulator, is between positive and negative electrodes; a case 510 accommodating the electrode assembly therein; and a cap plate 520 coupled to an open end of the case 510. The battery cell 500 shown in FIG. 5 may be a prismatic secondary battery, but the battery cell 500 according to the present disclosure is not limited thereto, and there may be one or more suitable types of secondary batteries.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material). The electrode assembly may have a positive electrode tab connected to a first side of the positive electrode plate and a negative electrode tab connected to a first side of the negative electrode plate. The positive electrode tap and the negative electrode tap may be electrically connected to the positive electrode terminal 530_1 and the negative electrode terminal 530_2 provided on the cap plate. The positive electrode terminals 530_1 and negative electrode terminals 530_2 provided on the cap plate may be electrically connected to the busbars.

The case may form the overall outer appearance of the battery cell and may be made of a conductive metal, such as aluminum, aluminum alloy, or nickel-plated steel. In addition, the case may provide a space in which the electrode assembly is accommodated.

According to one or more embodiments, the case 510 may be a prismatic case, and the battery cell 500 may be a prismatic battery cell. However, the scope of the present disclosure is not limited thereto, and the battery cell 500 may be a battery cell having any shape, such as a prismatic, cylindrical, or pouch shape.

The cap plate 520 may be coupled to an open end of the case 510 to seal the case 510. The case 510 and the cap plate 520 may include (e.g., be made of) a conductive material. According to one or more embodiments, the upper end of the case 510 may be open, and the cap plate 520 may seal the open upper end of the case 510.

The positive electrode terminal 530_1 connected (e.g., electrically connected) to a positive electrode and the negative electrode terminal 530_2 connected (e.g., electrically connected) to a negative electrode may be coupled to the cap plate 520. For example, the positive and negative electrode terminals 530_1 and 530_2 may be extended through the cap plate 520 and protrude outward.

The vent 540 may be on at least one side of the battery cell 500. As shown in FIG. 5, the vent 540 may be on the top surface of the battery cell 500, such as the cap plate 520. That is, the cap plate 520 may include the vent 540. The vent 540 may be configured to open when an internal pressure equal to or greater than a predetermined threshold pressure is generated in the battery cell 500.

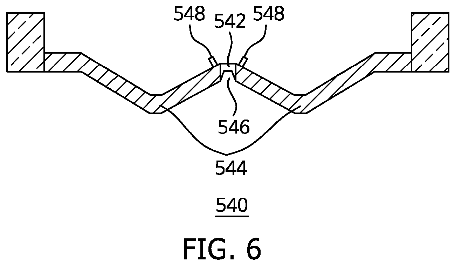

The vent 540 may include protrusions 548. The vent 540 may include a breakable portion 542 configured to break and a non-breakable portion 544 configured to deform. According to one or more embodiments, the breakable portion 542 and/or the non-breakable portion 544 may include the protrusions 548. None of the protrusions 548 are shown in FIG. 5 due to small sizes, but will be described in more detail with reference to FIGS. 6 through 12.

The cap plate 520 may include an electrolyte inlet 550. For example, the electrolyte inlet 550 may be a through-hole provided in the cap plate 520. After the cap plate 520 is coupled to an open area in the case 510 and sealed, the electrolyte inlet 550 allowing electrolyte to be injected into the case 510 may be formed. After the electrolyte is injected, the electrolyte inlet 550 may be sealed with a sealing member.

The battery cell 500 may be a lithium battery cell, a sodium battery cell, or the like. However, the scope of the present disclosure is not limited thereto, and the battery cell 500 includes any cell capable of repeatedly providing electricity by charging and discharging. In one or more embodiments, in a case where the battery cell 500 is a lithium battery cell, the battery cell 500 may be used in an electric vehicle (EV) due to excellent life characteristics and high rate capability thereof. The battery cell 500 may also be used in a hybrid vehicle, such as a plug-in hybrid electric vehicle (PHEV). Lithium battery cells may be used in fields that require large amounts of power storage. For example, lithium battery cells may be used in electric bicycles, power tools, and the like.

FIG. 6 illustrates a cross-section of the vent shown in FIG. 5, taken along line Y-Y'.

When the battery cell 500 operates abnormally, the internal temperature and pressure of the battery cell 500 may increase. In a case where the internal pressure of the battery cell 500 is equal to or greater than a threshold pressure, the vent 540 of the battery cell 500 may rupture to discharge gas from the battery cell 500.

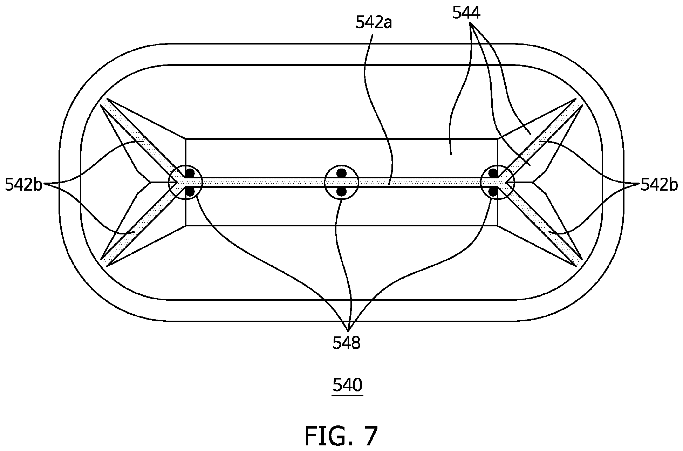

According to the present disclosure, the vent 540 of the battery cell 500 may include the breakable portion 542 that is configured to break in response to the rupture of the vent 540 and the non-breakable portion 544 that is configured to deform in response to the rupture of the vent 540. In a case where the non-breakable portion is deformed, the protrusion provided on the non-breakable portion may contact the pouch 400, thereby opening the pouch 400. Such protrusions will be described in more detail with reference to FIGS. 7 through 12.

The breakable portion 542 of the vent 540 may include a notch 546 configured to be broken by the internal pressure of the battery cell 500. In a case where the internal pressure of the battery cell 500 is applied to the vent 540, the notch 546 may cause the breakable portion 542 to break.

The non-breakable portion 544 of the vent 540 may be connected to the cap plate 520 of the battery cell 500. In a case where the vent 540 ruptures, the non-breakable portion 544 may deform and move close to the pouch 400. The deformation of the non-breakable portion 544 may cause the non-breakable portion 544 to contact the pouch 400. The protrusion may be provided on a portion where the non-breakable portion 544 contacts the pouch 400.

FIG. 7 illustrates a plan view showing an example of a protrusion of the non-breakable portion according to one or more embodiments of the present disclosure.

The vent 540 of the battery cell 500 may include the protrusions 548. The pouch 400 may be over the vent 540. In a case where the vent 540 ruptures, the protrusions 548 of the vent 540 may open the pouch 400. Accordingly, the positions of the protrusions 548 on the vent 540 may be determined so as to facilitate opening of the pouch 400 by the protrusions 548.

In a case where the vent 540 ruptures, the positions of the protrusions 548 may be set such that the protrusions 548 are highest on the vent 540 and contact the pouch 400. The protrusions 548 may be positioned on the non-breakable portion 544 of the vent 540.

The protrusions 548 may not be in contact with the pouch 400 prior to the rupture of the vent 540. The heights of the upper ends of the protrusions 548 may be set such that none of the protrusions 548 opens the pouch 400 prior to the rupture of vent 540. According to one or more embodiments, the protrusions 548 may be set such that the upper ends of the protrusions 548 are positioned within a vent hole. As a result, the pouch 400 may not be opened during normal operation of the battery cell 500.

The sizes of the protrusions 548 may be set to facilitate opening of the pouch 400 after the rupture of the vent 540. The sharper the protrusions 548, the easier the protrusions 548 may open the pouch 400. According to one or more embodiments, the protrusions 548 may be micro-protrusions. As a result, the protrusions 548 may facilitate opening of the pouch 400 during abnormal operation of the battery cell 500. However, the sizes and positions of the protrusions 548 are not limited to the embodiments, and the protrusions 548 may have one or more suitable sizes and positions.

Referring to FIG. 7, the breakable portion 542 may include a first breakable portion 542a which is at the center of the vent 540 and is the longest and second breakable portions 542b which are connected to the first breakable portion. That is, the first breakable portion 542a is at the center of the vent 540 and has a length greater than a length of the second breakable portions 542b.

The protrusions 548 may be at corners 549 of the non-breakable portion 544 defined by the first breakable portion 542a and the second breakable portions 542b. The corners 549 of the non-breakable portion 544 may be adjacent to regions where the first breakable portion 542a and the second breakable portions 542b are in contact.

In a case where the vent 540 ruptures, the protrusions 548 at the corners 549 of the non-breakable portion 544 may be the highest on the vents 540, and may open the pouch 400 by contacting the pouch 400.

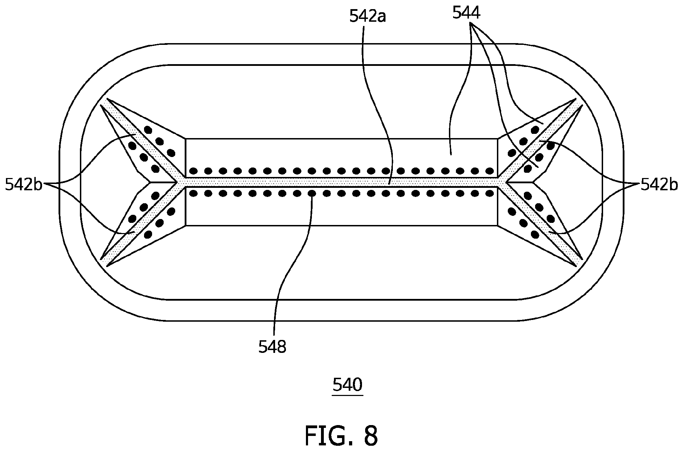

FIG. 8 illustrates a plan view showing another example of a protrusion of the non-breakable portion according to one or more embodiments of the present disclosure.

Description of any features that are redundant to those described with reference to FIG. 7 may not be provided. Referring to FIG. 8, the protrusions 548 of the non-breakable portions 544 may be at the corners of the non-breakable portions 544 defined by the breakable portion 542. Or in other words, the protrusions 548 of the non-breakable portions 544 may be positioned at the edges of the non-breakable portions 544 adjacent to the breakable portion 542. The corners of the non-breakable portions 544 may be portions adjacent to portions where the non-breakable portions 544 are in contact with the first breakable portion 542a and portions where the non-breakable portions 544 are in contact with the second breakable portions 542b. The corners of the non-breakable portions 544 may have a sufficient area for the protrusions 548 to be positioned thereon, and may be planar to facilitate forming of the protrusions 548. The protrusions 548 may be arranged in a single row along the corners of the non-breakable portions 544. The protrusions 548 may be arranged in a plurality of rows.

In a case where the vent 540 ruptures, the protrusions 548 at the corners of the non-breakable portions 544 may be the highest on the vent 540 so as to increase the number of protrusions 548 in contact with the pouch 400, thereby facilitating opening of the pouch 400.

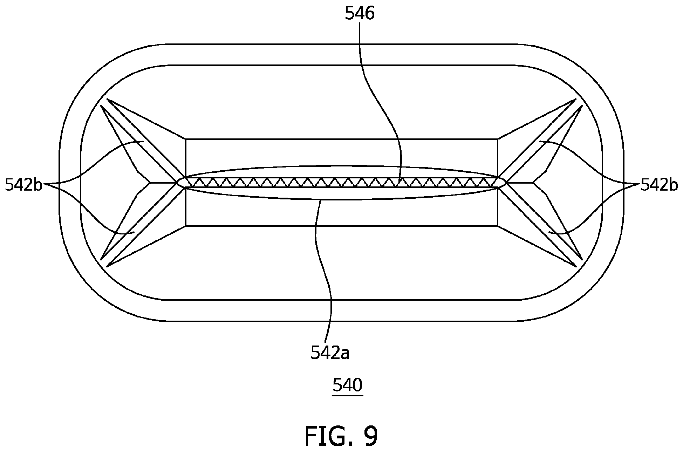

FIG. 9 illustrates a plan view showing an example of a notch of the non-breakable portion according to one or more embodiments of the present disclosure.

FIG. 9 illustrates a dotted line view of a notch 546 in the breakable portion 542 of the vent 540 (i.e. in the first breakable portion 542a of the breakable portion 542), as viewed from above the vent 540 (e.g., a plan view). The breakable portion 542 of the vent 540 may include the notch 546. The notch 546 may be on the top surface or on the bottom surface of the breakable portion 542, or may be on both the top surface and the bottom surface of the breakable portion 542. The shape of the notch 546 in the breakable portion 542 can include one or more suitable shapes. In a case where the vent 540 ruptures, the breakable portion 542 breaks according to the shape of the notch 546, and accordingly, the breakable portion 542 may break in various shapes. Depending on the break shape, in a case where the vent 540 ruptures, a protrusion 548 may be formed on a side surface of the non-breakable portion 544.

The notch 546 may have a zigzag shape, as shown in FIG.9. According to one or more embodiments, the first breakable portion 542a of the breakable portion 542 may include a zigzag notch 546 being extended through the entirety of the first breakable portion 542a. In one or more embodiments, the first breakable portion 542a may include a zigzag notch 546 on a portion of the first breakable portion 542a. The vent 540 may have a W-shape, when viewed in a cross-section view of the vent (see FIG.6), which allows to guide internal pressure towards the center, i.e. towards the breakable portion 542. In a case where the vent 540 ruptures, a plurality of protrusions 548 may be on side surfaces of the non-breakable portion 544. Accordingly, the protrusions 548 on the side surfaces of the non-breakable portion 544 may facilitate opening of the pouch 400.

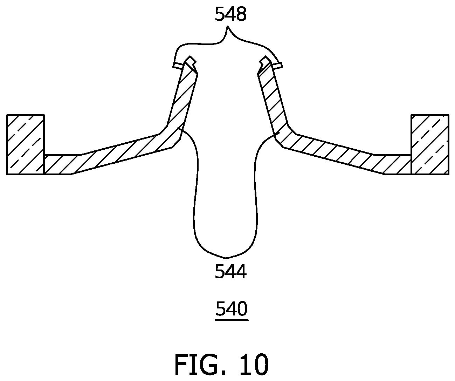

FIG. 10 illustrates an example of the vent according to one or more embodiments of the present disclosure in a case where the vent ruptures.

The protrusions 548 of the vent 540 may be on the top surface of the non-breakable portion 544. According to one or more embodiments, the protrusions 548 of the vent 540 may be on the top surface of the corners of the non-breakable portion 544 defined by the breakable portion 542. In a case where the vent 540 ruptures, the non-breakable portion 544, in connection to the cap plate 520, may be deformed outwardly from the battery cell 500 by the internal pressure of the battery cell 500. As a result, in a case where the vent 540 ruptures, the protrusions 548 may be highest on the vent 540 to contact the pouch 400, thereby facilitating opening of the pouch 400.

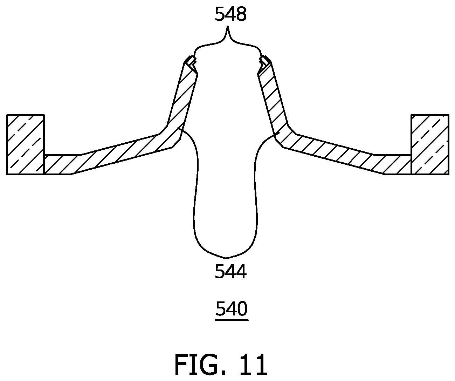

FIG. 11 illustrates another example of the vent according to one or more embodiments of the present disclosure in a case where the vent ruptures.

The protrusions 548 of the vent 540 may be on side surfaces of the non-breakable portions 544. The shape of the notch 546 in the breakable portion 542 may include one or more suitable shapes. In a case where the vent 540 ruptures, the breakable portion 542 may break according to the shape of the notch 546, and accordingly, the breakable portion 542 may break in various shapes. Accordingly, in a case where the vent 540 ruptures, the protrusions 548 may be formed on the side surfaces of the non-breakable portion 544.

According to one or more embodiments, in a case where the vent 540 ruptures, the protrusions 548 of the vent 540 may be highest on the vent 540. Accordingly, the protrusions 548 may more easily contact the pouch 400 to open the pouch 400.

In a case where the vent 540 ruptures, the positions and heights of the protrusions 548 may include one or more suitable position and heights depending on the pressure within the battery cell 500, and are not limited to the positions and heights shown in FIGS. 10 and 11.

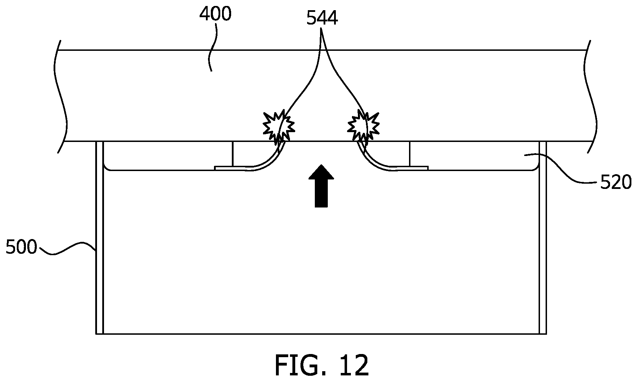

FIG. 12 illustrates an example of the vent and the pouch according to one or more embodiments of the present disclosure in a case where the vent ruptures.

Referring to FIG. 12, the pouch 400 may be over the vent 540 of the battery cell 500. The width of the pouch 400 may be greater than the length of the vent 540. The pouch 400 may contain a fire extinguishing agent.

According to one or more embodiments, in a case where the vent 540 ruptures, the non-breakable portion 544 of the vent 540 may be deformed. The non-breakable portion 544 may be deformed in the direction of the pouch 400 so that the protrusions on the non-breakable portion 544 may contact the pouch 400. Accordingly, the pouch 400 may be opened and the fire extinguishing agent may be discharged toward the vent 540 of the battery cell 500. Due to the characteristic structure, the internal temperature of the battery cell 500 may be rapidly reduced before thermal runaway of the battery cell 500 occurs, thereby preventing thermal runaway of the battery cell 500.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### Explanation of Reference Symbols

220: busbar
230: busbar holder
400: pouch
500: battery cell
510: case
520: cap plate
530_1, 530_2: electrode terminal
540: vent
542: breakable portion
542a: first breakable portion
542b: second breakable portion
544: non-breakable portion
546: notch
548: protrusion
549: corner

## Claims

1. A battery assembly (200) comprising:
a plurality of battery cells (500), each comprising a cap plate (520) having a vent (540); and
a pouch (400) over the vent (540), and the pouch (400) comprising a fire extinguishing agent,
wherein the vent (540) comprises a breakable portion (542) configured to break in response to a rupture of the vent (540) and a non-breakable portion (544) configured to deform in response to the rupture of the vent (540), and
the pouch (400) is configured to be opened by the deformation of the non-breakable portion (544) of the vent (540) to allow the fire extinguishing agent to be discharged toward the vent (540) of each of the battery cells (500).

2. The battery assembly (200) as claimed in claim 1, wherein the breakable portion (542) comprises a notch (546) configured to be broken by an internal pressure of the battery cell (500), and
the non-breakable portion (544) is connected to the cap plate (520) of the battery cell (500).

3. The battery assembly (200) as claimed in claim 2, wherein the notch (546) has a zigzag shape.

4. The battery assembly (200) as claimed in one of the preceding claims, wherein the vent (540) comprises a protrusion (548), and
the pouch (400) is configured to be opened by the protrusion (548).

5. The battery assembly (200) as claimed in claim 4, wherein the protrusion (548) is on the non-breakable portion (544).

6. The battery assembly (200) as claimed in one of claims 4 or 5, wherein the protrusion (548) is on a corner of the non-breakable portion (544) defined by the breakable portion (542).

7. The battery assembly (200) as claimed in one of claims 4 to 6, wherein the breakable portion (542) comprises:
a first breakable portion (542a) located at the center of the vent (540); and
a second breakable portion (542b) connected to the first breakable portion (542a),
wherein the protrusion (548) is on a corner of the non-breakable portion (544) defined by the first breakable portion (542a) and second breakable portion (542b).

8. The battery assembly (200) as claimed in one of claims 4 to 7, wherein the protrusion (548) is on a top surface of the non-breakable portion (544).

9. The battery assembly (200) as claimed in one of claims 4 to 7, wherein the protrusion (548) is on a side portion of the non-breakable portion (544).

10. The battery assembly (200) as claimed in one of the preceding claims,
wherein a width of the pouch (400) is less than a distance between electrode terminals (530_1, 530_2) of the battery cell (500) and greater than a length of the vent (540).

11. The battery assembly (200) as claimed in one of the preceding claims,
wherein a length of the pouch (400) is a multiple of a width of the battery cell (500).

12. The battery assembly (200) as claimed in one of the preceding claims,
wherein the pouch (400) covers the vents (540) of the battery cells (500).

13. The battery assembly (200) as claimed in one of the preceding claims, wherein the pouch (400) comprises one of polyamide, polypropylene, low density polyethylene, or linear low density polyethylene.

14. The battery assembly (200) as claimed in one of the preceding claims, wherein the fire extinguishing agent comprises a fluorinated ketone.

15. The battery assembly (200) as claimed in one of the preceding claims, wherein the pouch (400) is located over the vent (540) by being spaced apart from electrode terminals (530_1, 530_2) of the cap plate (520).
